# EUROPEAN PATENT APPLICATION

(11) **EP 0 619 477 A1**
(43) Date of publication of application: **12.10.1994**
(21) Application number: 94400666.7
(22) Date of filing: 29.03.1994
(51) Int. Cl.: G01L 9/00, G01N 9/26

(54) **High accuracy pressure sensor, a pressure gradiometer incorporating such a sensor, and a method of manufacturing the sensor**

(30) Priority: 09.04.1993 FR 9304228
(71) Applicant: SCHLUMBERGER LIMITED, New York, N.Y. 10172 (US); SCHLUMBERGER TECHNOLOGY B.V., NL-2517 KM Den Haag (NL); SCHLUMBERGER HOLDINGS LIMITED, Road Town, Tortola (VG)
(72) Inventor: Donzier, Eric, F-77115 Blandy les Tours (FR); Rezgui, Fadhel, F-92330 Sceaux (FR)
(74) Representative: Hagel, Francis

(57) **Abstract**

In a pressure sensor whose sensitive element is constituted by a deformable membrane (22) carrying a bridge of piezoresistive strain gauges suitable for measuring deformation of the membrane, a decoupling piece (34) is interposed between the membrane (22) and its support (28). The decoupling piece includes a deformable zone (38), and limited clearance (44) is left between the outer peripheral zone (36) of the decoupling piece (34) and the support (28) such that when pressure is applied during manufacture of the sensor to fix the membrane (22) to the decoupling piece (34), e.g. by gluing, the deformable zone (38) does not break.

## Description

The invention relates mainly to a high accuracy sensor pressure suitable for operating in a medium subjected to a hydrostatic pressure that is very high (e.g. about 1,000 bars). The invention also relates to a pressure gradiometer incorporating a differential pressure sensor. Finally, the invention also relates to a method of manufacturing such a pressure sensor.

Given its characteristics, a particular application of the pressure sensor of the invention lies in the differential pressure measurements that are performed in oil wells, in particular for measuring the density of the fluid present in the well at a given level or for measuring the displacement speed of the fluid, e.g. by the Venturi effect. Nevertheless, applications of the pressure sensor of the invention are not limited to the petroleum industry and they cover all fields in which a pressure or a pressure difference needs to be measured in a manner that is particularly reliable and accurate. Thus, and merely by way of example, the pressure sensor of the invention may be used in a Pitot tube as used onboard aircraft for measuring speed.

To perform differential pressure measurements in an oil well, it is known to make use of pressure sensors in which the sensitive element is constituted by a membrane suitable for deforming when a very small pressure difference exists across the membrane. Membrane deformation may be measured, for example, by means of piezoresistive strain gauges associated with the membrane.

In pressure sensors of this type, the deformable membrane comprises a frame-forming peripheral portion via which the membrane is fixed on a rigid support, e.g. by gluing or by welding.

Conventionally, the peripheral region of the deformable membrane is glued or welded directly to the rigid support. However, that disposition gives rise to measurement errors that are sometimes large because of the stresses induced in the membrane by the surrounding temperature or pressure. These stresses may be the result, in particular, of differences between the thermal expansion coefficients and the elasticity moduli of the materials constituting the membrane and the support. In addition, the deformations to which the rigid support is subjected because of a change in temperature or pressure are transmitted in full to the membrane via its peripheral region. These deformations give rise to a measurement error, which can be particularly large when the initial shape of the membrane is not plane. The amplitude of the error also increases when the assembly method used between the peripheral region of the membrane and the rigid support is heterogeneous.

To remedy this drawback, proposals have been made to interpose a decoupling piece between the deformable membrane and its rigid support. The decoupling piece is made of the same material as the membrane and includes a deformable zone that mechanically isolates the deformable membrane from its support. A pressure sensor made using that technique is described in US Patent 4 295 117 and in the paper by Frank K. Haag et al., ISA Instrumentation Symposium in Las Vegas, May 1977, entitled "Development of a sputtered thin film pressure transducer for use over the temperature range of -320°F to 500°F". Recently, a pressure sensor including a decoupling piece has been described in US Patent 4 800 758.

In particular, with reference to its Figure 3, that document describes a pressure sensor comprising a decoupling piece including an outer peripheral zone onto which the peripheral region of the deformable membrane is glued, a deformable intermediate zone that is substantially plane, and a central or inner zone that is glued to the facing face of the rigid support.

In practice, assembling the various parts that make up the sensor requires a certain amount of pressure to be applied. However, the structure described in document US-A-4 800 758 is such that it is practically impossible to apply the pressure required for assembly without giving rise to stresses in the deformable intermediate zone of the decoupling piece that run the risk of breaking it. In other words, it is not possible in practice to manufacture a very high sensitivity pressure sensor having the structure described in document US-A-4 800 758 without breaking the decoupling piece because of the high decoupling coefficient that is required by the thinness of the membrane due to the required sensitivity.

A particular object of the invention is to provide a pressure sensor having all of the advantages procured by the sensor described in document FR-A-4 800 758, and in particular high sensitivity and high accuracy independently of ambient pressure and temperature, but which is easily manufactured with high reliability and at low cost, without any risk of breaking the decoupling piece, even if it is very thin.

According to the invention, this result is obtained by means of a pressure sensor comprising a rigid support, a deformable membrane placed facing a bearing face of the rigid support, a decoupling piece interposed between the membrane and the bearing face, and measurement means for measuring deformation of the membrane, the decoupling piece including an outer peripheral zone fixed in sealed manner to a peripheral region of the membrane, an inner zone fixed in sealed manner to the bearing face, and a deformable intermediate zone, and wherein the outer peripheral zone of the decoupling piece is, in the absence of deformation of said intermediate zone, separated from the bearing face by clearance that allows no more than mechanically-acceptable deformation of the intermediate zone.

Because of the limited clearance that exists between the outer peripheral zone of the decoupling piece and the facing face of the support, it is possible to fix the inner zone of the decoupling piece on the bearing face, e.g. by gluing, and then to fix the peripheral region of the membrane on the outer peripheral zone of the decoupling piece without generating any stress that runs the risk of damaging the decoupling piece and making the sensor inoperative.

In a preferred embodiment of the invention, the bearing face of the rigid support is substantially plane, the outer peripheral zone forming an abutment surface facing the bearing face, and separated therefrom by said clearance.

Advantageously, the sealed fixing of the decoupling piece to the support and the sealed fixing of the membrane to the decoupling piece is performed in both cases by rigid gluing.

In the preferred embodiment of the invention, the decoupling piece is a substantially plane piece of smaller thickness in the deformable intermediate zone than in the outer peripheral zone and in the inner zone. Similarly, the deformable membrane is substantially plane and is of smaller thickness in a membrane-forming central region than in the peripheral region.

In conventional manner, the measurement means for measuring deformation of the membrane comprise a bridge of piezoresistive strain gauges supported by the membrane.

The pressure sensor of the invention is particularly suitable for measuring differential pressure. Under such circumstances, it includes a central duct passing through the rigid support and the inner zone of the decoupling piece.

The invention also provides a pressure gradiometer comprising a passage filled with liquid and having its ends opening out at two spaced-apart locations, and a differential pressure sensor placed in said passage, said differential pressure sensor being as defined above, with its central duct opening out towards one end of the passage and with its membrane facing towards the other end.

The invention also provides a method of manufacturing a pressure sensor of the above-specified type, in which the steps of performing sealed fixing of the inner zone of the decoupling piece and of performing sealed fixing of the peripheral region of the membrane are performed in that order by applying pressure, with the step of sealed fixing of the peripheral region of the membrane giving rise to mechanically acceptable deformation of a deformable intermediate zone of the decoupling piece because of the outer peripheral zone of said piece coming into abutment against the bearing face.

A preferred embodiment of the invention is described below by way of non-limiting example and with reference to the accompanying drawings, in which:
Figure 1 is a longitudinal section through a pressure gradiometer placed in an oil well for the purpose of performing density measurements therein;
Figure 2 is a perspective view on a larger scale showing a differential pressure sensor suitable for use in the Figure 1 gradiometer and implemented in accordance with the invention;
Figure 3 is a vertical section through the differential pressure sensor shown in Figure 2;
Figure 4 is a vertical section on a larger scale showing a portion of the differential pressure sensor of the invention; and
Figures 5A to 5D are diagrammatic section views showing the main steps in manufacturing the differential pressure sensor of the invention.

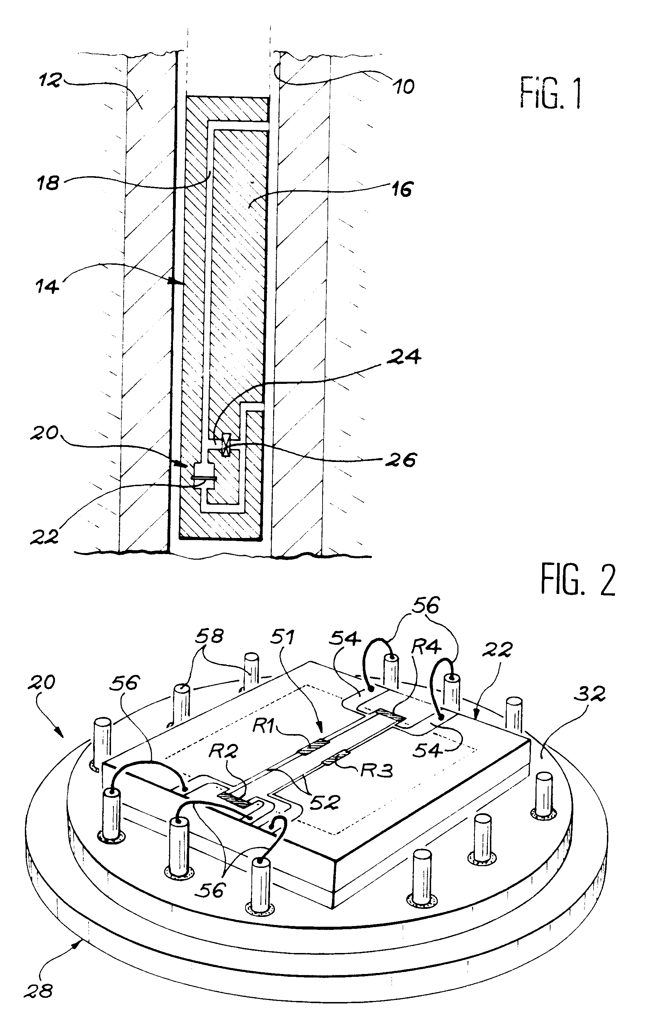

Figure 1 shows a length of an oil well 10 delimited by casing 12. In order to enable the well to be worked under the best possible conditions, it is necessary to distinguish inside the well 10 between regions that contain water and regions that contain oil.

To make this distinction, a pressure gradiometer 14 is lowered down the well 10 for the purpose of measuring the density of the fluid present in the well along the entire length of the well travelled by said apparatus. The gradiometer 14 is suspended from a cable (not shown in Figure 1) which serves to lower it and then to raise it, and which also serves to transmit to the surface signals generated by said apparatus that are representative of fluid density.

The gradiometer 14 comprises a cylindrical body 16 having a passage 18 formed therein and filled with a reference liquid of known density, e.g. a silicone oil. The ends of the passage 18 open out at two different levels of the body 16. The difference between these two levels corresponds to a known height h, e.g. about 0.50 meters (m).

A differential pressure sensor 20 is placed in the passage 18. This sensor includes a deformable membrane 22 that closes the passage 18 in sealed manner and that co-operates with the pressure that exists in the well around the gradiometer 14 to maintain the liquid in place in the passage 18. The value of said pressure increases with the depth to which the apparatus is lowered, and may be as much as 1,000 bars.

The density of the reference liquid present in the passage 18 is written ρ₀, and the density of the fluid present in the well at the level of the gradiometer 14 is written ρₓ, thus causing the membrane 22 of the differential pressure sensor 20 to be subjected to a pressure difference written ΔP and given by the equation:
ΔP = (ρₒ - ρₓ).g.h.cos Θ
in which:
g represents the modulus of the local gravity field; and
Θ represents the angle of inclination of the apparatus relative to the vertical.

This equation shows clearly that the pressure difference seen by the membrane 22 of the sensor 20 is representative of the density ρₓ of the fluid present in the well.

The gradiometer 14 preferably further includes a bypass duct 24 inside the body 16 and connected to the passage 18 both upstream and downstream relative to the pressure sensor 20. A normally-closed valve 26 is placed in the bypass duct 24. The value 26 is designed to open under the effect of a shock so as to avoid damaging the membrane 22.

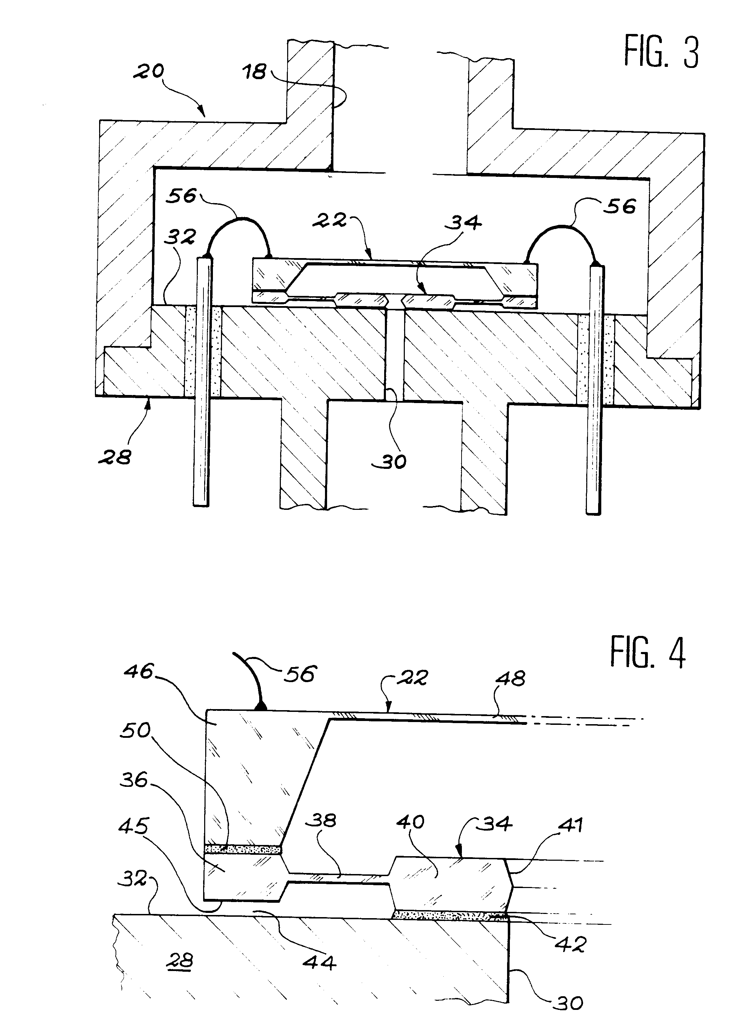

The structure of the differential pressure sensor 20 of the invention is described below in detail with reference to Figures 2 to 4.

The sensor 20 of the invention comprises firstly a rigid support 28 in the form of a disk and made of a material such as "Kovar" (registered trademark). As can be seen particularly in Figures 1 and 3, the rigid support 28 is placed in a larger-diameter portion of the passage 18 and extends perpendicularly to the passage. It is connected in sealed manner to the wall delimiting the passage 18 and it has a central duct 30 passing through it on the axis of the passage (see Figure 3).

The disk-shaped rigid support 28 has a plane top face or "bearing" face 32 extending perpendicularly to the axis of the passage 18 and designed to support the deformable membrane 22 of the sensor. More precisely, the plane top face 32 of the rigid support 28 supports the deformable membrane 22 via a decoupling piece 34.

The decoupling piece 34 is a thin plane plate, e.g. a square plate, that may be made of silicon for example, using techniques that are conventional in the manufacture of microsensors (oxidation, deposition, photo-etching, anisotropic micro-machining). The decoupling piece 34 includes an outer peripheral zone 36, a deformable intermediate zone 38, and an inner zone 40.

The thickness of the inner zone 40 corresponds, for example, to the initial thickness of the silicon wafer. The thickness of the outer peripheral zone 36 is less than that, so that the bottom face of the outer peripheral zone is offset from the bottom face of the inner zone 40 (Figure 4). The deformable intermediate zone 38 is thin, e.g. about 50 µm thick. This deformable intermediate zone 38 is obtained by removing matter from both of the faces of the wafer in such a manner that the outer peripheral zone 36 projects from said deformable intermediate zone 38 towards the face 32 of the rigid support 38 when the decoupling piece 34 is fixed on said face 32. The bottom face of the outer peripheral zone 36 defines a plane abutment surface 45 (Figure 4) facing the face 32 of the rigid support.

The inner zone 40 has a duct 41 passing through its center and designed to be put into alignment with the duct 30.

The decoupling piece 34 is fixed on the face 32 of the rigid support 28 by gluing the inner zone 40 via a film of glue 42. Because the invention makes it possible to exert high pressure on the parts to be assembled together, the thickness and the uniformity of the film of glue 42 that are of determining importance for the metrology of the system can be accurately controlled. Once this gluing has been done, a limited amount of clearance 44 exists between the face 32 of the rigid support 28 and the abutment surface 45 formed on the outer peripheral zone 36 of the decoupling piece 34. The size of this clearance 44 is determined so that the deformation to which the intermediate zone 38 is subjected by causing the abutment surface 44 to press against the face 32 of the rigid support is mechanically acceptable for said intermediate zone 38. As an illustration, the clearance 44 may be about 30 µm.

Like the decoupling piece 34, the deformable membrane 22 is made from a silicon wafer by using the micro-machining techniques that are conventionally implemented in the field of microsensors. It is in the form of a plate that is plane and square and whose outside dimensions are identical to those of the decoupling piece 34.

The deformable membrane 22 includes a peripheral region 46 whose thickness corresponds to the thickness of the initial wafer, for example, and a central region 48 of reduced thickness constituting the membrane proper. In particular, the thickness of said central region 48 may be equal to about 50 µm.

The deformable membrane 22 is fixed in sealed manner to the decoupling piece 34 by rigidly gluing the peripheral region 46 to the outer peripheral zone 36 via a film of glue 50. Once the sensor has been completed, the thickness of the film of glue 50 is generally less than 3 µm, and this is made possible by the fact that pressure can be exerted during assembly.

Advantageously, the glue used for the films of glue 42 and 50 is an epoxy glue that provides sealed and-high temperature (200°C) rigid fixing at low cost.

To detect and measure deformations of the central portion 48 of the deformable membrane 22, measurement means are used that comprise a bridge of piezoresistive strain gauges 51 formed on the top face of the membrane 22, for example, as shown in Figure 2. This strain gauge bridge can be obtained by implementing techniques that are conventional in microelectronics. It comprises four resistances R1, R2, R3, and R4 disposed in pairs along two orthogonal directions, together with electrically conductive links 52 interconnecting the resistances so as to form a strain gauge bridge 51. Contacts 54 are also formed on the top face of the membrane 22 so as to enable the strain gauge bridge to be connected to an electronics cartridge (not shown) via electrical conductors 56 bonded to the contacts 54 and passing in sealed manner through the rigid support 28.

Other sealed feedthroughs 58 may be provided through the rigid support 28, as shown in Figure 2, for the purpose of passing other electrical conductors, in particular for the purpose of conveying electrical measurement signals delivered by the electronics cartridge (not shown) to the surface.

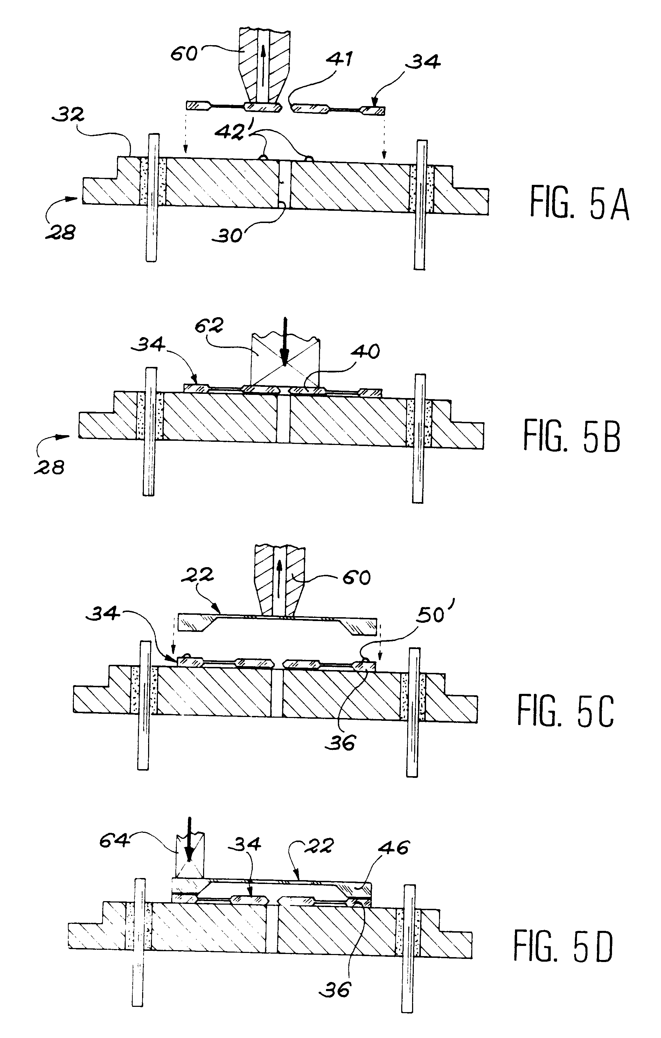

The structure of the pressure sensor as described above with reference to Figures 2 to 4 makes it possible to manufacture the sensor in a manner that is simple and cheap, with optimum reliability, and as described below with reference to Figures 5A to 5D.

Initially, and as shown in Figure 5A, a few calibrated drops of glue 42' are deposited on the face 32 of the rigid support 28 around the central duct 30, e.g. by using a needle. The decoupling piece 34 is then put into place using a suction pipette 60, ensuring that its central duct 41 is in alignment with the central duct 30.

A calibrated force is then applied to the inner zone 40 of the decoupling piece 34, e.g. by means of a tool 62, thereby pressing said zone with a determined amount of force against the face 32 of the rigid support 28, as shown in Figure 5B. This operation makes it possible to ensure that the gluing is sealed and effective, and also ensures that a desired thickness is obtained for the film of glue 42.

After this first assembly has-been cured, and as shown in Figure 5C, a few calibrated drops of glue 50' are then deposited on the top face of the outer peripheral zone 36 of the decoupling piece 34. The deformable membrane 22 is then put into place on the decoupling piece 34 using the suction pipette 60.

Finally, as shown in Figure 5D, a calibrated force is applied to the peripheral region 36 of the deformable membrane 22, e.g. by means of a tool 64. This operation serves to ensure that the gluing of said region 46 on the outer peripheral zone 36 of the decoupling piece 34 is sealed and effective, and also serves to ensure that the desired thickness is obtained for the film of glue 50.

During this operation, the limited clearance 44 that exists between the outer peripheral zone 36 and the top face 32 of the rigid support 28 (Figure 4) is closed up by the deformable intermediate zone 38 of the decoupling piece bending a small amount, without any risk of said piece breaking, given the small size of the initial clearance 44 (e.g. about 30 µm). As already mentioned, the clearance is designed to ensure that the deformation applied to the intermediate zone 38 while the deformable membrane 22 is being glued to the decoupling piece 34 does not exceed limits that are mechanically acceptable for said piece.

Consequently, the above-described disposition of the pressure sensor of the present invention guarantees manufacture with hardly any rejects and at lower cost than is possible with existing pressure sensors.

In operation, the existence of the decoupling piece 34 between the deformable membrane 48 and the rigid support 28 makes it possible to perform measurements that are very accurate and entirely reproducible, and this is because interfering deformations of the membrane that could result from deformations of the rigid support 28 due to pressure or to temperature are not transmitted to the membrane by the decoupling piece 34.

It should be observed that the pressure sensor of the invention which is used as a differential pressure sensor in the embodiments described above can also be used as an absolute pressure sensor insofar as the pressure to be measured is very close to the reference pressure that exists on the other side of the membrane. Under such circumstances, the central duct 41 through the decoupling piece 34 can be omitted.

In addition, and as already mentioned, the pressure sensor of the invention can be used to perform pressure measurements or differential pressure measurements in apparatus other than a pressure gradiometer as shown in Figure 1. Thus, and solely by way of example, the pressure sensor of the invention can be used for measuring the displacement speed of a fluid in a borehole, or more generally, the displacement speed of a mobile such as an aircraft.

In addition, although the sealed rigid connection between each of the pieces constituting the pressure sensor is advantageously provided by means of an epoxy glue as described above, other connection means may be envisaged, for example a gold film bond or a powdered "Pyrex" (registered trademark) bond.

## Claims

1. A pressure sensor comprising a rigid support (28), a deformable membrane (22) placed facing a bearing face (32) of the rigid support, a decoupling piece (34) interposed between the membrane and the bearing face, and measurement means (R1, R2, R3, R4) for measuring deformation of the membrane, the decoupling piece including an outer peripheral zone (36) fixed in sealed manner to a peripheral region of the membrane, an inner zone (40) fixed in sealed manner to the bearing face, and a deformable intermediate zone (38), the outer peripheral zone (36) of the decoupling piece (34) being, in the absence of deformation of said intermediate zone (38), separated from the bearing face (32) by clearance (44) that allows no more than mechanically-acceptable deformation of the intermediate zone (38).

2. A pressure sensor according to claim 1, wherein the bearing face (32) of the rigid support is substantially plane, the outer peripheral zone (36) forming an abutment surface (45) facing the bearing face, and separated therefrom by said clearance (44).

3. A pressure sensor according to claim 1 or 2, wherein the peripheral region (46) of the membrane (22) is fixed in sealed manner to the outer peripheral zone (36) of the decoupling piece (34) by a first film of glue (50), and the inner zone (40) of the decoupling piece (34) is fixed in sealed manner to said bearing face (32) by a second film of glue (42).

4. A pressure sensor according to any one of claims 1 to 3, wherein the decoupling piece (34) is a substantially plane piece of smaller thickness in the deformable intermediate zone (38) than in the outer peripheral zone (36) and in the inner zone (40).

5. A pressure sensor according to any one of claims 1 to 4, wherein the deformable membrane (22) is substantially plane and is of smaller thickness in a membrane-forming central region (48) than in the peripheral region (46).

6. A pressure sensor according to any one of claims 1 to 5, wherein the measurement means for measuring deformation of the membrane (22) comprises a bridge of piezoresistive strain gauges (R1, ..., R4) supported by the membrane.

7. A pressure sensor according to any one of claims 1 to 6, wherein the deformable membrane (22) and the decoupling piece (34) are both made of silicon.

8. A pressure sensor according to any one of claims 1 to 7, adapted for measuring a differential pressure, including a central duct (30, 41) passing through the rigid support (28) and the inner zone (40) of the decoupling piece (34).

9. A pressure gradiometer comprising a passage (18) filled with liquid and having its ends opening out at two spaced-apart locations, and a differential pressure sensor (20) placed in said passage, said differential pressure sensor being as defined in claim 8, with its central duct (30, 41) opening out towards one end of the passage and with its membrane (22) facing towards the other end.

10. A pressure gradiometer according to claim 9, wherein a bypass duct (24) including a normally-closed valve (26) is connected to said passage (18) around the differential pressure sensor (20), said valve being suitable for opening under the effect of a sudden displacement of liquid in the passage.

11. A method of manufacturing a pressure sensor that comprises a rigid support (28), a deformable membrane (22) placed facing a bearing face (32) of the rigid support, a decoupling piece (34) interposed between the membrane and the bearing face, and measurement means (R1, ..., R4) for measuring deformation of the membrane, the method comprising a step in which an inner zone (40) of the decoupling piece is fixed in sealed manner to the bearing face and a step in which a peripheral region (46) of the membrane is fixed in sealed manner to an outer peripheral zone (36) of the decoupling piece, the method further comprising the steps of fixing the inner zone in sealed manner and of fixing the peripheral region in sealed manner take place in that order while applying pressure, the step of fixing the peripheral region of the membrane in sealed manner giving rise to deformation of a deformable intermediate zone (38) of the decoupling piece that is mechanically-acceptable by virtue of the outer peripheral zone (36) coming into abutment against the bearing face (32).

12. A method according to claim 11, wherein the steps of fixing the inner zone (40) in sealed manner and of fixing the peripheral region (46) in sealed manner are performed by gluing.

13. A method according to claim 12, wherein the gluing is performed by means of an epoxy glue.
